# EUROPÄISCHE PATENTSCHRIFT

(11) **EP 2 842 889 B1**
(45) Veröffentlichungstag und Bekanntmachung des Hinweises auf die Patenterteilung: **27.04.2016**
(21) Anmeldenummer: 14176641.0
(22) Anmeldetag: 11.07.2014
(51) Int. Cl.: B65G 21/12, B65G 47/64, B65G 21/22

(54) **Vorrichtung zum Umsetzen von Werkstückträgern mit Gleitführung**
Lifting device for conveying workpiece holders with sliding guide
Dispositif élévateur de porte-pièces doté d'un guidage coulissant

(30) Priorität: 09.08.2013 DE 102013215753
(43) Veröffentlichungstag der Anmeldung: 04.03.2015
(73) Patentinhaber: ROBERT BOSCH GMBH, 70442 Stuttgart (DE)
(72) Erfinder: Kiebel, Markus, 70499 Stuttgart (DE)
(74) Vertreter: Maiß, Harald

(56) Entgegenhaltungen:
- EP-A1- 2 110 328
- DE-A1- 10 045 742
- DE-U1- 20 216 092
- JP-A- 2003 081 421
- US-A- 5 957 265

## Beschreibung

Die Erfindung betrifft eine Vorrichtung zum Umsetzen von Werkstücken bzw. Werkstückträgern gemäß dem Oberbegriff von Anspruch 1.

Aus der JP 2003-81421 A und DE 20216092 U1 sind gattungsgemäße Vorrichtungen zum Umsetzen von Werkstücken bzw. Werkstückträgern bekannt.

Aus der DE 30 12 355 C2 ist eine Vorrichtung zum Umsetzen von Werkstückträgern bekannt, welche auch als Hub-Quereinheit bezeichnet wird. Die Vorrichtung umfasst eine Tragbaugruppe, mit der sie an einer übergeordneten Fördervorrichtung, namentlich einem Doppelgurtförderer, befestigbar ist. Weiter ist eine Führungsbaugruppe vorgesehen, welche zwei endlose Zugmittel umfasst, welche parallel zueinander angeordnet sind. Bei den Zugmitteln handelt es sich um Flachriemen oder Zahnriemen. Die Zugmittel werden jeweils durch ein Antriebsrad und zwei Umlenkräder geführt, welche drehbar an der Führungsbaugruppe gelagert sind. Zwischen den Umlenkrädern verlaufen die Zugmittel gerade, wobei sie eine Förderrichtung definieren. Dort liegen die typischerweise plattenförmigen Werkstückträger, die mit Werkstücken beladen sind, auf den Zugmitteln auf, wobei die Zugmittel wiederum an der Führungsbaugruppe abgestützt sind. Weiter ist ein Hubantrieb in Form eines Pneumatikzylinders vorgesehen, mit welchem die Führungsbaugruppe gegenüber der Tragbaugruppe bezüglich einer Hubrichtung bewegt werden kann, wobei die Hubrichtung senkrecht zur Förderrichtung ausgerichtet ist. Eine Querrichtung ist dabei senkrecht zur Förderrichtung und zur Hubrichtung ausgerichtet.

Am Markt werden auch Hub-Quereinheiten angeboten, bei denen das Zugmittel in Form einer Rollenkette ausgebildet ist. Mit einem derartigen Zugmittel lassen sich schwerere Werkstücke transportieren. Auch bei diesen Vorrichtungen sind drehbare Umlenkräder zur Führung der Rollenkette vorgesehen.

Ein Vorteil der Erfindung besteht darin, dass mit der Vorrichtung zum Umsetzen von Werkstücken bzw. Werkstückträgern besonders schwere Werkstücke transportiert werden können, wobei die Vorrichtung besonders kostengünstig ist. Weiter arbeitet die Vorrichtung besonders verschleißarm. Darüber hinaus wird eine Kollektion von Vorrichtungen geschaffen, die sich hinsichtlich Länge und Breite unterscheiden, wobei sie im Übrigen besonders viele identische Teile aufweisen.

Gemäß dem selbständigen Anspruch wird vorgeschlagen, dass die Führungsbaugruppe eine erste und eine gesonderte zweite Gleitführung für die erste bzw. die zweite Förderkette aufweist, welche jeweils einen geraden Förderabschnitt aufweisen, an dessen beiden gegenüberliegenden Enden jeweils ein erster und ein zweiter gebogener Umlenkabschnitt vorgesehen ist. Die genannten Gleitführungen sind besonders kostengünstig. Entgegen dem im Stand der Technik bestehenden Vorurteil gegenüber Gleitführungen kommt es bei der erfindungsgemäßen Gleitführung nicht zu übermäßigem Verschleiß durch die gleitende Anlage der Förderkette, welche vorzugsweise aus Stahl besteht.

In den abhängigen Ansprüchen sind vorteilhafte Weiterbildungen und Verbesserungen der Erfindung angegeben.

Die erste und/oder die zweite Gleitführung können über ihre gesamte Länge spalt- und absatzfrei verlaufen. Hierdurch wird ein besonders reibungsarmer Lauf der Förderkette erreicht. Gleichzeitig verteilt sich die Last der Werkstückträger bzw. der Werkstücke über eine besonders große Fläche, so dass der Verschleiß gering ist.

Die erste und die zweite Gleitführung können identisch ausgebildet sein. Hierdurch können die erste und die zweite Gleitführung in großer Stückzahl und damit kostengünstig hergestellt werden.

Die erste und die zweite Förderkette können Rollenketten sein, wobei die erste und die zweite Gleitführung über ihre gesamte Länge jeweils eine konstante Querschnittsform aufweist, welche wenigstens zwei parallele Nuten aufweist, zwischen denen eine ebene Auflagefläche angeordnet ist. Die genannten Nuten verlaufen vorzugsweise parallel zur Förderrichtung. Die Laschen der Rollenkette greifen vorzugsweise in die genannten Nuten ein, wobei sie mit Spiel in den zugeordneten Nuten laufen. Damit verursachen die Laschen im Wesentlichen keinen Verschleiß. Die Röllchen der Rollenkette rollen vorzugsweise verschleißarm auf der Auflagefläche ab. Bei den Rollenketten handelt es sich vorzugsweise um Duplex-Rollenketten, die beispielsweise nach DIN 8187 oder DIN 8188 ausgebildet sein können, wobei vorzugsweise drei Nuten vorgesehen sind.

Die erste und die zweite Gleitführung können jeweils einen ersten Profilkörper aufweisen, der sich mit einer konstanten Querschnittsform in Förderrichtung erstreckt, wobei der Förderabschnitt von einer gesonderten ersten Gleitleiste gebildet wird, die am ersten Profilkörper befestigt ist, wobei der erste und der zweite Umlenkabschnitt von einer zweiten bzw. dritten Gleitleiste gebildet werden, die am ersten Profilkörper befestigt sind. Der erste Profilkörper wird vorzugsweise aus Aluminium im Strangpressverfahren hergestellt. Er kann daher problemlos auf unterschiedliche Längen abgeschnitten werden, so dass in Förderrichtung unterschiedlich lange Vorrichtungen bereitgestellt werden können. Die erste Gleitführung weist vorzugsweise über ihre gesamte Länge ebenfalls eine konstante Querschnittsform auf, wobei sie höchst vorzugsweise im Kunststoff-Extrusions-Verfahren hergestellt ist. Die zweite und die dritte Gleitleiste sind vorzugsweise identisch ausgebildet, wobei in unterschiedlich großen Vorrichtungen identische zweite und dritte Gleitleisten zum Einsatz kommen. Die zweite und die dritte Gleitleiste sind vorzugsweise im Kunststoff-Spritzgussverfahren hergestellt.

Die erste Gleitleiste kann aus Polyethylen bestehen, wobei die zweite und die dritte Gleitleiste aus, vorzugsweise faserverstärktem, Polyamid bestehen. Hierdurch wird der Verschleiß am ersten und am zweiten gebogenen Umlenkabschnitt minimiert, wobei der gerade Förderabschnitt, in dem wenig Verschleiß zu befürchten ist, besonders kostengünstig und reibungsarm ist.

Die erste und die zweite Gleitführung können bezüglich der Querrichtung neben der Tragbaugruppe angeordnet sein. Der erste und der zweite gebogene Umlenkabschnitt weist zur Verschleißminimierung in Hubrichtung eine große Länge auf. Durch die vorgeschlagene Anordnung der Tragbaugruppe wird dabei die Höhe der gesamten Vorrichtung, also die Länge in Hubrichtung, minimiert, so dass sie nicht größer ist als bei bekannten Vorrichtungen mit vergleichsweise kleinen Umlenkrädern.

Der ersten und der zweiten Gleitführung ist jeweils wenigstens ein gesonderter erster Hubantrieb zugeordnet. Hierdurch können besonders schwere Werkstücke angehoben werden, ohne dass ein Verbiegen oder gar ein Verklemmen der Vorrichtung zu befürchten ist. Weiter kann die Relativlage zwischen den ersten Hubantrieben und den Gleitführungen unabhängig von der Breite der gesamten Vorrichtung gleich ausgebildet werden.

Die ersten Hubantriebe sind bezüglich der Querrichtung zwischen der ersten und der zweiten Gleitführung angeordnet, vorzugsweise unmittelbar benachbart zu einer zugeordneten Gleitführung. Hierdurch wird die Baubreite der gesamten Vorrichtung minimiert. Die genannte Baubreite ist dann im Wesentlichen genau so groß wie die Breite der zu transportierenden Werkstückträger.

Die Tragbaugruppe weist wenigstens einen zweiten Profilkörper auf, der sich mit einer konstanten Querschnittsform in Förderrichtung erstreckt, wobei wenigstens ein zugeordneter Hubantrieb quer zur Förderrichtung unmittelbar benachbart zum zweiten Profilkörper angeordnet und, wenigstens mittelbar, fest mit diesem verbunden ist. Der zweite Profilkörper wird vorzugsweise aus Aluminium im Strangpressverfahren hergestellt. Er kann daher problemlos auf unterschiedliche Längen abgeschnitten werden, so dass in Förderrichtung unterschiedlich lange Vorrichtungen bereitgestellt werden können. Durch den geringen Abstand zwischen dem zweiten Profilkörper und dem zugeordneten Hubantrieb werden Biegebeanspruchungen auf den zweiten Profilkörper minimiert.

Es kann wenigstens eine ebene Tragplatte vorgesehen sein, welche senkrecht zur Hubrichtung ausgerichtet ist, wobei wenigstens ein zugeordneter zweiter Profilkörper und wenigstens ein zugeordneter Hubantrieb auf der gleichen Seite der Tragplatte angeordnet und befestigt sind. Mittels der Tragplatte werden die zweiten Profilkörper fest mit den zugeordneten Hubantrieben verbunden. Die Tragplatte besteht vorzugsweise aus Stahl- oder Aluminiumblech, so dass sie mittels Laserstrahlschneiden bearbeitet werden kann. Auf diese Weise lassen sich für unterschiedlich große Vorrichtungen kostengünstig unterschiedliche Tragplatten herstellen.

Es sind mehrere Hubantriebe vorgesehen, die über wenigstens eine Hebelvorrichtung bewegungsgekoppelt sind, die wenigstens ein Drehlager aufweist, welches an einem zugeordneten zweiten Profilkörper befestigt ist. Durch die an sich bekannte Hebelvorrichtung soll erreicht werden, dass sich alle Hubvorrichtungen synchron bewegen. Die Drehlager der Hubvorrichtung werden dabei am zweiten Profilkörper besonders steif abgestützt.

Die erste und die zweite Gleitführung können über wenigstens einen dritten Profilkörper, der sich mit einer konstanten Querschnittsform in Querrichtung erstreckt, fest miteinander verbunden sein. Der dritte Profilkörper wird vorzugsweise aus Aluminium im Strangpressverfahren hergestellt. Er kann daher problemlos auf unterschiedliche Längen abgeschnitten werden, so dass in Querrichtung unterschiedlich breite Vorrichtungen bereitgestellt werden können.

Es kann wenigstens ein zweiter Hubantrieb vorgesehen sein, welcher an dem dritten Profilkörper befestigt ist. Diese Ausführungsform wird vorzugsweise bei besonders breiten Vorrichtungen eingesetzt, um die Last der Werkstücke möglichst gleichmäßig an der gesamten Führungsbaugruppe abzustützen. In der Folge treten geringe Verbiegungen der Vorrichtung auf.

In Förderrichtung kann vor und/oder hinter der ersten und der zweiten Förderkette eine drehbare Rolle angeordnet sein, die zusammen mit der zugeordneten Förderkette eine gemeinsame Förderebene definiert. Durch die genannte Rolle wird der Freiraum im Bereich der ersten und der zweiten Umlenkung ausgefüllt. Hierdurch wird verhindert, dass Bedienpersonal mit den Fingern in diesen Freiraum greift, so dass es nicht zu Verletzungen durch die laufende Förderkette kommt. Weiter wird verhindert, dass der Werkstückträger an dem genannten Freiraum hängen bleibt, wenn er von der erfindungsgemäßen Vorrichtung auf die übergeordnete Fördervorrichtung läuft oder umgekehrt.

Die Rolle kann an der zugeordneten zweiten oder dritten Gleitleiste drehbar gelagert sein. Hierbei ist vorzugsweise an eine kostengünstige Gleitlagerung gedacht, wobei die zweite und die dritte Gleitleiste vorzugsweise aus Kunststoff bestehen. Die Rolle besteht vorzugsweise aus Stahl.

An der ersten und/oder der zweiten Gleitführung kann wenigstens ein Anschlag befestigt sein, welcher in Hubrichtung über die zugeordnete Förderkette übersteht. Die Vorrichtung weist dabei vorzugsweise drei Hubstellungen auf. In einer mittleren Hubstellung steht der Anschlag in Hubrichtung über die Fördermittel der übergeordneten Fördervorrichtung über, wobei die Förderketten unterhalb der genannten Fördermittel angeordnet sind. Der Anschlag hält dann Werkstückträger auf, welche auf der übergeordneten Fördervorrichtung laufen. In der in Hubrichtung oberen Hubstellung kommt die Förderkette in Eingriff mit den Werkstückträgern, so dass die erfindungsgemäße Vorrichtung die Werkstückträger quer zur Laufrichtung der übergeordneten Fördervorrichtung transportieren kann. In der unteren Hubstellung befindet sich der Anschlag unterhalb des Fördermittels der übergeordneten Förderrichtung, so dass die dort laufenden Werkstückträger nicht aufgehalten werden.

Die Erfindung wird im Folgenden anhand der beigefügten Zeichnungen näher erläutert. Es stellt dar:
- Fig. 1: eine perspektivische Ansicht einer erfindungsgemäßen Vorrichtung;
- Fig. 2: eine Explosionsansicht der Vorrichtung nach Fig. 1; und
- Fig. 3: eine perspektivische Teilansicht der ersten Gleitleiste.

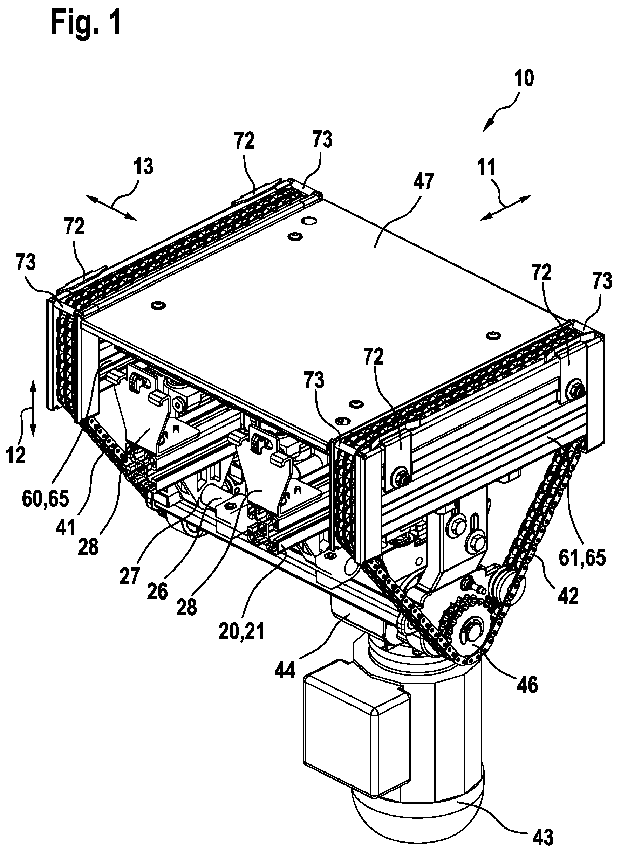

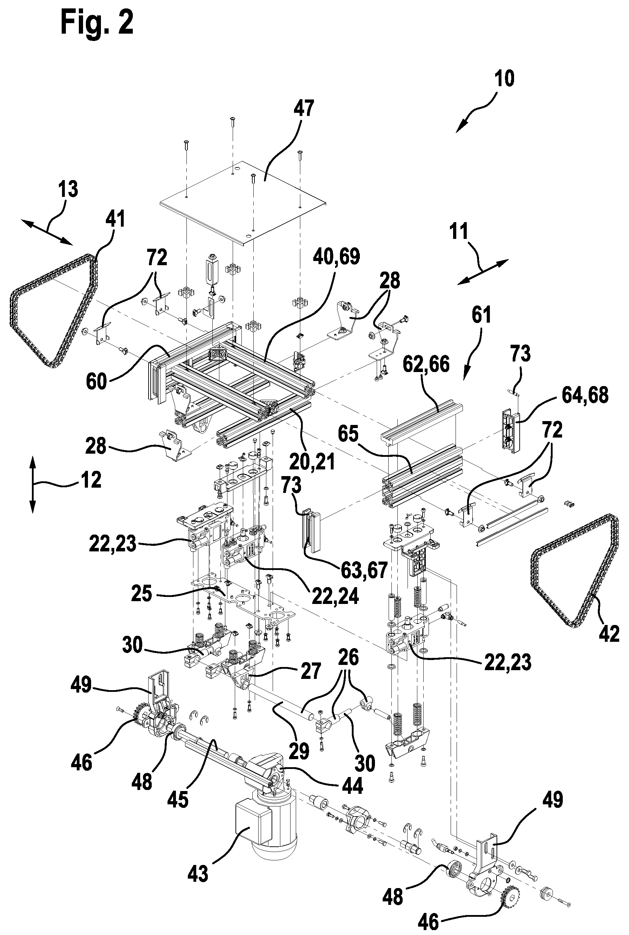

Fig. 1 zeigt eine perspektivische Ansicht einer erfindungsgemäßen Vorrichtung 10, wobei Fig. 2 eine Explosionsansicht dieser Vorrichtung 10 zeigt. Die Vorrichtung 10 umfasst eine Tragbaugruppe 20, welche im vorliegenden Fall zwei zweite Profilkörper 21 umfasst, die sich mit einer konstanten Querschnittsform in Förderrichtung 11 erstrecken. Je nach Breite der Vorrichtung 10 können auch mehr oder weniger zweite Profilkörper 21 vorhanden sein. Die zweiten Profilkörper 21 sind vorzugsweise aus Aluminium im Strangpressverfahren hergestellt, wobei sie vorzugsweise hinterschnittene, insbesondere T-förmige, Befestigungsnuten aufweisen. An den beiden Enden der zweiten Profilkörper 21 ist jeweils ein Befestigungsblech 28 befestigt, mit dem die Tragbaugruppe an einer übergeordneten (nicht dargestellten) Fördervorrichtung befestigt werden kann. Entgegen der Darstellung in Fig. 1 und 2 können die zweiten Profilträger 21 durch weitere Profilkörper fest miteinander verbunden sein, welche in Querrichtung 13 verlaufen.

Unten an den zweiten Profilkörpern 21 ist eine gemeinsame Tragplatte 25 befestigt, insbesondere festgeschraubt, welche aus einem Aluminium- oder einem Stahlblech, vorzugsweise mittels Laserstrahlschneiden, hergestellt ist. Alternativ können auch mehrere gesonderte Tragplatten 25 vorgesehen sein. Oben auf der Tragplatte 25 sind vorliegend insgesamt drei Hubantriebe 22 befestigt, wobei je nach Breite und Länge der Vorrichtung mehr oder weniger Hubantriebe 22 vorgesehen sein können. Die beiden ersten Hubantriebe 23 sind unmittelbar benachbart neben einem zugeordneten ersten Profilkörper 65, der sich in Förderrichtung 11 erstreckt, angeordnet und an diesem befestigt. Die beiden ersten Profilkörper 65 sind über zwei dritte Profilkörper 69 fest miteinander verbunden, welche sich mit einer konstanten Querschnittsform in Querrichtung 13 erstrecken. Der zweite Hubanrieb 24 ist bezüglich der Hubrichtung 12 zwischen der Tragplatte 25 und den dritten Profilkörpern 60 angeordnet und fest mit diesen verbunden. Oben auf den dritten Profilkörpern 69 ist ein Abdeckblech 47 befestigt, welches den Zwischenraum zwischen den Gleitführungen 60; 61 vollständig überdeckt.

Alle Hubantriebe 22 sind mit Ausnahme der oberen Befestigungsmittel für die Führungsbaugruppe 40 identisch ausgebildet. Sie umfassen einen doppelwirkenden Pneumatikzylinder, welcher mittels Federn in eine mittlere Stellung vorgespannt ist, wobei er durch entsprechende Druckluftzufuhr in eine bezüglich der Hubrichtung obere und eine untere Stellung bewegt werden kann. Der genaue Aufbau der Hubantriebe 22 ist Gegenstand einer parallelen Anmeldung der Anmelderin, die zeitgleich mit der vorliegenden Anmeldung eingereicht wurde.

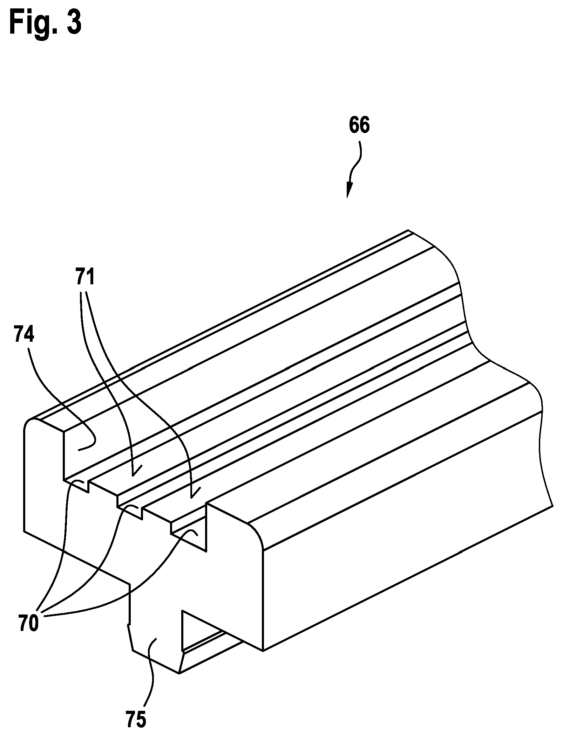

Die ersten Profilkörper 65 sind jeweils Bestandteil einer ersten und einer identischen zweiten Gleitführung 60; 61 der Führungsbaugruppe 40. Die ersten Profilkörper 65 erstrecken sich mit einer konstanten Querschnittsform in Förderrichtung 11, wobei sie vorzugsweise aus Aluminium im Strangpressverfahren hergestellt sind. Die ersten Profilkörper 65 sind mit mehreren hinterschnittenen, insbesondere T-förmigen, Befestigungsnuten versehen. Weiter weisen sie beispielsweise zwei geschlossene Befestigungskanäle auf. An der Oberseite der ersten Profilkörper 65 ist eine erste Gleitleiste 66 angeordnet, welche sich mit einer konstanten Querschnittsform gerade in Förderrichtung 11 erstreckt. Die erste Gleitleiste 66 bildet den geraden Förderabschnitt 62 der Gleitführungen 60; 61. Sie ist mit einem Klemmfortsatz (Nr. 75 in Fig. 3) in eine hinterschnittene Befestigungsnut des zugeordneten ersten Profilkörpers 65 eingeklemmt. An den beiden gegenüberliegenden ebenen Stirnflächen des ersten Profilkörpers 65, die senkrecht zur Förderrichtung 11 ausgerichtet sind, sind die zweite und die dritte Gleitleiste 67; 68 befestigt. Diese greifen beispielsweise mit jeweils zwei Klemmfortsätzen in die genannten geschlossenen Befestigungskanäle des zugeordneten ersten Profilkörpers 65 ein. Die zweite und die dritte Gleitleiste 67; 68 bilden den gebogenen ersten bzw. zweiten Umlenkabschnitt 63; 64. Sie weisen hierfür zwei kreisförmige 90°-Biegungen auf, die über einen geraden Abschnitt miteinander verbunden sind.

Um die erste und die zweite Gleitführung 60; 61 herum ist eine erste bzw. eine parallele zweite endlose Förderkette 40; 41 geführt, so dass diese gleitbeweglich sind. Unten an der Führungsbaugruppe 40 ist ein Elektromotor 43 mit einem Getriebe 44 und einer Antriebswelle 46 angeordnet. Die beiden Drehlager 48 der Antriebswelle 46, welche beispielsweise als Radialrillenkugellager ausgebildet sind, sind in einem zugeordneten Lagergehäuse 49 aufgenommen, welches mittelbar an einer zugeordneten Gleitführung 60; 61 verschiebbar befestig ist, so dass die Förderketten 41; 42 gespannt werden können. Auf der Antriebswelle 46, die beispielsweise als Sechskantwelle ausgebildet ist, ist an den beiden äußeren Enden jeweils ein Zahnrad drehfest angebracht, welches von einer zugeordneten Förderkette 41; 42 umschlungen wird. Damit können die Förderketten 41; 42 von dem Elektromotor 43 in Bewegung versetzt werden.

Weiter ist auf die Rollen 73 hinzuweisen, die jeweils in einer zugeordneten zweiten bzw. dritten Gleitleiste 67; 68 drehbar gelagert sind, wobei in jeder zweiten bzw. dritten Gleitleiste eine derartige Rolle 73 vorgesehen ist. Die Rollen 73 bilden zusammen mit der zugeordneten Förderkette 41; 42 eine gemeinsame Förderebene, so dass der Freiraum im Bereich der Rollen 73 ausgefüllt ist.

An der ersten und der zweiten Gleitführung 60; 61, insbesondere am ersten Profilkörper 65, sind jeweils zwei Anschläge 72 befestigt, die über die zugeordnete Förderkette in Hubrichtung nach oben überstehen. Die Anschläge 72 bestehen vorzugsweise aus Stahlblech und sind vorzugsweise mittels Hammerschrauben mit dem ersten Profilkörper 65 verstellbar verschraubt.

Die Hebelvorrichtung 26 besitzt mehrere Drehlager 27, die an einem zugeordneten zweiten Profilkörper befestigt sind. In den Drehlagern 27 ist eine kreiszylindrische Achse 29 drehbar gelagert, vorzugsweise gleitgelagert. An der Achse 29 sind mehrere Hebelarme 30 befestigt, die relativ zueinander unbeweglich sind. Die Enden der Hebelarme 30 greifen in das gegenüber der Tragbaugruppe 20 bewegliche Teil eines jeweils zugeordneten Hubantriebs 22 ein, so dass sich alle Hubantriebe 22 synchron bewegen.

Fig. 3 zeigt eine perspektivische Teilansicht der ersten Gleitleiste 66. Zu erkennen ist insbesondere das konstante Querschnittprofil der ersten Gleitleiste 66. Diese umfasst insgesamt drei Nuten 70, welche an die Laschen der Förderkette angepasst sind. Die Förderketten sind vorzugsweise als Duplex-Rollenkette nach DIN 8187 oder DIN 8188 ausgebildet. Dementsprechend laufen die genannten Laschen in den Nuten mit geringem Spiel, wobei die Rollen der Rollenkette auf den ebenen Auflageflächen 71 abrollen, die zwischen den Nuten 70 angeordnet sind. Weiter sind zwei gegenüberliegende Seitenführungen 74 für die Förderkette vorgesehen, welche über die Auflagefläche 71 überstehen. Die Seitenführungen 74 werden vorzugsweise von einer Verlängerung einer Seitenfläche einer zugeordneten Nut 70 gebildet. Die vorstehend beschriebene Kontur setzt sich identisch an der zweiten und der dritten Gleitleiste fort, wobei die Übergänge spalt- und absatzfrei ausgebildet sind.

An der Unterseite der ersten Gleitleiste 66 ist ein im Wesentlichen rechteckiger Klemmfortsatz 75 vorgesehen, welcher zwei Einführschrägen aufweist, damit er leichter in die hinterschnittene Nut des zugeordneten ersten Profilkörpers eingeführt werden kann.

### Bezugszeichenliste

- 10: Vorrichtung
- 11: Förderrichtung
- 12: Hubrichtung
- 13: Querrichtung

- 20: Tragbaugruppe
- 21: zweiter Profilkörper
- 22: Hubantrieb
- 23: erster Hubantrieb
- 24: zweiter Hubantrieb
- 25: Tragplatte
- 26: Hebelvorrichtung
- 27: Drehlager
- 28: Befestigungsblech für übergeordnete Fördervorrichtung
- 29: Achse
- 30: Hebelarm

- 40: Führungsbaugruppe
- 41: erste Förderkette
- 42: zweite Förderkette
- 43: Elektromotor
- 44: Getriebe
- 45: Antriebswelle
- 46: Zahnrad
- 47: Abdeckblech
- 48: Drehlager
- 49: Lagergehäuse

- 60: erste Gleitführung
- 61: zweite Gleitführung
- 62: Förderabschnitt
- 63: erster Umlenkabschnitt
- 64: zweiter Umlenkabschnitt
- 65: erster Profilkörper
- 66: erste Gleitleiste
- 67: zweite Gleitleiste
- 68: dritte Gleitleiste
- 69: dritter Profilkörper
- 70: Nut
- 71: Auflagefläche
- 72: Anschlag
- 73: Rolle
- 74: Seitenführung
- 75: Klemmfortsatz

## Patentansprüche

1. Vorrichtung (10) zum Umsetzen von Werkstücken bzw. Werkstückträgern mit einer Tragbaugruppe (20), welche an einer übergeordneten Fördervorrichtung befestigbar ist, wobei eine Führungsbaugruppe (40) vorgesehen ist, welche eine erste und eine zweite endlose Förderkette (41; 42) umfasst, die parallel zueinander angeordnet sind, wobei sie eine Förderrichtung (11) definieren, wobei wenigstens ein Hubantrieb (22; 23) vorgesehen ist, mit welchem die Führungsbaugruppe (40) gegenüber der Tragbaugruppe (20) bezüglich einer Hubrichtung (12), die senkrecht zur Förderrichtung (11) ausgerichtet ist, bewegt werden kann, wobei eine Querrichtung (13) senkrecht zur Förderrichtung (11) und zur Hubrichtung (12) ausgerichtet ist, wobei die Führungsbaugruppe (40) eine erste und eine gesonderte zweite Gleitführung (60; 61) für die erste bzw. die zweite Förderkette (41; 42) aufweist, welche jeweils einen geraden Förderabschnitt (62) aufweisen, an dessen beiden gegenüberliegenden Enden jeweils ein erster und ein zweiter gebogener Umlenkabschnitt (63; 64) vorgesehen ist,
wobei der ersten und der zweiten Gleitführung (60; 61) jeweils wenigstens ein gesonderter erster Hubantrieb (23) zugeordnet ist,
wobei die ersten Hubantriebe (23) bezüglich der Querrichtung (13) zwischen der ersten und der zweiten Gleitführung (60; 61) angeordnet sind,
**dadurch gekennzeichnet, dass** die Tragbaugruppe (20) wenigstens einen zweiten Profilkörper (21) aufweist, der sich mit einer konstanten Querschnittsform in Förderrichtung (11) erstreckt, wobei wenigstens ein zugeordneter Hubantrieb (22; 23) quer zur Förderrichtung unmittelbar benachbart zum zweiten Profilkörper (21) angeordnet und, wenigstens mittelbar, fest mit diesem verbunden ist,
wobei die mehrere Hubantriebe (22; 23) vorgesehen sind, die über wenigstens eine Hebelvorrichtung (26) bewegungsgekoppelt sind, die wenigstens ein Drehlager (27) aufweist, welches an einem zugeordneten zweiten Profilkörper (21) befestigt ist.

2. Vorrichtung nach Anspruch 1,
wobei die erste und/oder die zweite Gleitführung (60; 61) über ihre gesamte Länge spalt- und absatzfrei verlaufen.

3. Vorrichtung nach einem der vorstehenden Ansprüche,
wobei die erste und die zweite Gleitführung (60; 61) identisch ausgebildet sind.

4. Vorrichtung nach einem der vorstehenden Ansprüche,
wobei die erste und die zweite Förderkette (41; 42) Rollenketten sind, wobei die erste und die zweite Gleitführung (60; 61) über ihre gesamte Länge jeweils eine konstante Querschnittsform aufweist, welche wenigstens zwei parallele Nuten (70) aufweist, zwischen denen eine ebene Auflagefläche (71) angeordnet ist.

5. Vorrichtung nach einem der vorstehenden Ansprüche,
wobei die erste und die zweite Gleitführung (60; 61) jeweils einen ersten Profilkörper (65) aufweisen, der sich mit einer konstanten Querschnittsform in Förderrichtung erstreckt, wobei der Förderabschnitt (62) von einer gesonderten ersten Gleitleiste (66) gebildet wird, die am ersten Profilkörper (65) befestigt ist, wobei der erste und der zweite Umlenkabschnitt (63; 64), von einer zweiten bzw. dritten Gleitleiste (67; 68) gebildet werden, die am ersten Profilkörper (65) befestigt sind.

6. Vorrichtung nach Anspruch 5,
wobei die erste Gleitleiste (66) aus Polyethylen besteht, wobei die zweite und die dritte Gleitleiste (67; 68) aus, vorzugsweise faserverstärktem, Polyamid bestehen.

7. Vorrichtung nach einem der vorstehenden Ansprüche,
wobei die erste und die zweite Gleitführung (60; 61) bezüglich der Querrichtung (13), neben der Tragbaugruppe (20) angeordnet sind.

8. Vorrichtung nach einem der vorstehenden Ansprüche,
wobei die ersten Hubantriebe (23) unmittelbar benachbart zu einer zugeordneten Gleitführung (60; 61) angeordnet sind.

9. Vorrichtung nach einem der vorstehenden Ansprüche,
wobei wenigstens eine ebene Tragplatte (25) vorgesehen ist, welche senkrecht zur Hubrichtung (12) ausgerichtet ist, wobei wenigstens ein zugeordneter zweiter Profilkörper (21) und wenigstens ein zugeordneter Hubantrieb (22; 23; 34) auf der gleichen Seite der Tragplatte (25) angeordnet und befestigt sind.

10. Vorrichtung nach einem der vorstehenden Ansprüche,
wobei die erste und die zweite Gleitführung (60; 61) über wenigstens einen dritten Profilkörper (69), der sich mit einer konstanten Querschnittsform in Querrichtung (13) erstreckt, fest miteinander verbunden sind.

11. Vorrichtung nach Anspruch 10,
wobei wenigstens ein zweiter Hubantrieb (24) vorgesehen ist, welcher an dem dritten Profilkörper (69) befestigt ist.

12. Vorrichtung nach einem der vorstehenden Ansprüche,
wobei in Förderrichtung (11) vor und/oder hinter der ersten und der zweiten Förderkette (41; 42) eine drehbare Rolle (73) angeordnet ist, die zusammen mit der zugeordneten Förderkette (41; 42) eine gemeinsame Förderebene definiert.

13. Vorrichtung nach Anspruch 12, rückbezogen auf Anspruch 5,
wobei die Rolle (73) an der zugeordneten zweiten oder dritten Gleitleiste (67; 68) drehbar gelagert ist.

14. Vorrichtung nach einem der vorstehenden Ansprüche,
wobei an der ersten und/oder der zweiten Gleitführung (60; 61) wenigstens ein Anschlag (72) befestigt ist, welcher in Hubrichtung (12) über die zugeordnete Förderkette (41; 42) übersteht.

## Claims

1. Apparatus (10) for transferring workpieces or workpiece carriers, having a carrying subassembly (20), which can be fastened on a higher-level conveying apparatus, wherein a guidance subassembly (40) is provided, the latter comprising a first and a second endless conveying chain (41; 42), which are arranged parallel to one another, wherein these define a conveying direction (11), wherein at least one lifting drive (22; 23) is provided, it being possible for the guidance subassembly (40) to be moved by said lifting drive in relation to the carrying subassembly (20) in respect of a lifting direction (12), which is oriented transversely to the conveying direction (11), wherein a transverse direction (13) is oriented transversely to the conveying direction (11) and to the lifting direction (12), wherein the guidance subassembly (40) has a first and a separate, second sliding guide (60; 61) for the first and the second conveying chains (41; 42), respectively, each having a rectilinear conveying portion (62), at the two opposite ends of which in each case a first and a second curved deflecting portion (63; 64) are provided,
wherein the first and the second sliding guides (60; 61) are each assigned at least one separate, first lifting drive (23),
wherein the first lifting drives (23) are arranged between the first and the second sliding guides (60; 61), as seen in respect of the transverse direction (13),
**characterized in that** the carrying subassembly (20) has at least one second profile body (21), which extends with a constant cross-sectional shape in the conveying direction (11), wherein at least one associated lifting drive (22; 23) is arranged directly adjacent to the second profile body (21), as seen transversely to the conveying direction, and is fixed, at least indirectly, thereto,
wherein the plurality of lifting drives (22; 23) are provided and coupled for movement via at least one lever mechanism (26), which has at least one rotary bearing (27) fastened on an associated second profile body (21).

2. Apparatus according to Claim 1,
wherein the first and/or the second sliding guides (60; 61) run/runs without any gaps or offsets over their its entire length.

3. Apparatus according to either of the preceding claims,
wherein the first and the second sliding guides (60; 61) are of identical design.

4. Apparatus according to one of the preceding claims,
wherein the first and the second conveying chains (41; 42) are roller chains, wherein the first and the second sliding guides (60; 61) each have, over their entire length, a constant cross-sectional shape having at least two parallel grooves (70), between which a planar bearing surface (71) is arranged.

5. Apparatus according to one of the preceding claims,
wherein the first and the second sliding guides (60; 61) each have a first profile body (65), which extends with a constant cross-sectional shape in the conveying direction, wherein the conveying portion (62) is formed by a separate, first sliding strip (66), which is fastened on the first profile body (65), wherein the first and the second deflecting portions (63; 64) are formed by a second and third sliding strip (67; 68), respectively, said sliding strips being fastened on the first profile body (65).

6. Apparatus according to Claim 5,
wherein the first sliding strip (66) consists of polyethylene, wherein the second and the third sliding strips (67; 68) consist of, preferably fibre-reinforced, polyamide.

7. Apparatus according to one of the preceding claims,
wherein the first and the second sliding guides (60; 61) are arranged alongside the carrying subassembly (20), as seen in respect of the transverse direction (13).

8. Apparatus according to one of the preceding claims,
wherein the first lifting drives (23) are arranged directly adjacent to an associated sliding guide (60; 61).

9. Apparatus according to one of the preceding claims,
wherein at least one planar carrying plate (25) is provided, said plate being oriented perpendicularly to the lifting direction (12), wherein at least one associated second profile body (21) and at least one associated lifting drive (22; 23; 34) are arranged, and fastened, on the same side of the carrying plate (25).

10. Apparatus according to one of the preceding claims,
wherein the first and the second sliding guides (60; 61) are fixed to one another via at least one third profile body (69), which extends with a constant cross-sectional shape in the transverse direction (13).

11. Apparatus according to Claim 10,
wherein at least one second lifting drive (24) is provided, said lifting drive being fastened on the third profile body (69).

12. Apparatus according to one of the preceding claims,
wherein a rotatable roller (73) is arranged upstream and/or downstream of the first and the second conveying chains (41; 42), as seen in the conveying direction (11), and said roller, together with the associated conveying chain (41; 42), defines a common conveying plane.

13. Apparatus according to Claim 12, with reference back to Claim 5,
wherein the roller (73) is mounted in a rotatable manner on the associated second or third sliding strip (67; 68).

14. Apparatus according to one of the preceding claims,
wherein at least one stop (72) is fastened on the first and/or the second sliding guide (60; 61), said stop projecting in the lifting direction (12) beyond the associated conveying chain (41; 42).

## Revendications

1. Dispositif (10) pour transporter des pièces usinées et/ou des supports de pièces usinées avec un module porteur (20) pouvant être fixé à un dispositif de transport supérieur, un module de guidage (40) étant prévu comprenant une première et une deuxième chaîne de transport (41 ; 42) sans fin disposées parallèlement l'une par rapport à l'autre, celles-ci définissant une direction de transport (11), au moins un entraînement de levée (22 ; 23) étant prévu à l'aide duquel le module de guidage (40) peut être déplacé vis-à-vis du module porteur (20) par rapport à une direction de levée (12) orientée perpendiculairement à la direction de transport (11), une direction transversale (13) étant orientée perpendiculairement à la direction de transport (11) et par rapport à la direction de levée (12), le module de guidage (40) comportant un premier et un deuxième guide coulissant (60 ; 61) séparé pour la première et/ou la deuxième chaîne de transport (41 ; 42) comportant respectivement une section de transport (62) droite au niveau des deux extrémités opposées de laquelle une première et une deuxième section de déviation (63 ; 64) incurvée est respectivement prévue ;
au moins un premier entraînement de levée (23) séparé étant respectivement associé au premier et au deuxième guide coulissant (60 ; 61) ;
les premiers entraînements de levée (23) étant disposés entre le premier et le deuxième guide coulissant (60 ; 61) par rapport à la direction transversale (13) ; **caractérisé en ce que** le module porteur (20) comporte au moins un deuxième corps profilé (21) s'étendant avec une forme de section transversale constante dans la direction de transport (11), au moins un entraînement de levée (22 ; 23) associé étant disposé transversalement à la direction de transport directement à proximité du deuxième corps profilé (21) et étant fixement relié à lui, au moins indirectement ; les multiples entraînements de levée (22 ; 23) étant prévus, ceux-ci étant couplés en mouvement via au moins un dispositif de levier (26) comportant au moins un palier pivotant (27) fixé à un deuxième corps profilé (21) associé.

2. Dispositif selon la revendication 1, le premier et/ou le deuxième guide coulissant (60 ; 61) s'étendant sans fente et sans décrochement sur la totalité de leur longueur.

3. Dispositif selon l'une quelconque des revendications précédentes, le premier et le deuxième guide coulissant (60 ; 61) étant réalisés de façon identique.

4. Dispositif selon l'une quelconque des revendications précédentes, la première et la deuxième chaîne de transport (41 ; 42) étant des chaînes de roulement, le premier et le deuxième guide coulissant (60 ; 61) présentant sur la totalité de leur longueur une forme de section transversale constante comportant au moins deux rainures (70) parallèles entre lesquelles une surface d'appui (71) plane est disposée.

5. Dispositif selon l'une quelconque des revendications précédentes, le premier et le deuxième guide coulissant (60 ; 61) comportant respectivement un premier corps profilé (65) s'étendant avec une forme de section transversale constante dans la direction de transport, la section de transport (62) étant formée par une première baguette coulissante (66) fixée au premier corps profilé (65), la première et la deuxième section de déviation (63 ; 64) étant formées par une deuxième et/ou une troisième baguette coulissante (67 ; 68) fixées au premier corps profilé (65).

6. Dispositif selon la revendication 5, la première baguette coulissante (66) étant en polyéthylène, la deuxième et la troisième baguette coulissante (67 ; 68) étant en polyamide, de préférence renforcé en fibres.

7. Dispositif selon l'une quelconque des revendications précédentes, le premier et le deuxième guide coulissant (60 ; 61) étant disposés par rapport à la direction transversale (13), à côté du module porteur (20).

8. Dispositif selon l'une quelconque des revendications précédentes, les premiers entraînements de levée (23) étant disposés directement à proximité d'un guide coulissant (60 ; 61) associé.

9. Dispositif selon l'une quelconque des revendications précédentes, au moins une plaque portante (25) plane étant prévue, ladite plaque étant orientée perpendiculairement à la direction de levée (12), au moins un deuxième corps profilé (21) associé et au moins un entraînement de levée (22 ; 23 ; 34) associé étant disposés et fixés sur le même côté de la plaque portante (25).

10. Dispositif selon l'une quelconque des revendications précédentes, le premier et le deuxième guide coulissant (60 ; 61) étant reliés fixement entre eux via au moins un troisième corps profilé (69) s'étendant avec une forme de section transversale constante dans la direction transversale (13).

11. Dispositif selon la revendication 10, au moins un deuxième entraînement de levée (24) étant prévu, celui-ci étant fixé au troisième corps profilé (69).

12. Dispositif selon l'une quelconque des revendications précédentes, un rouleau (73) pivotant étant disposé devant et/ou derrière la première et la deuxième chaîne de transport (41 ; 42) dans la direction de transport (11), ledit rouleau définissant conjointement avec la chaîne de transport (41 ; 42) associée un plan de transport commun.

13. Dispositif selon la revendication 12, en référence à la revendication 5, le rouleau (73) étant disposé de façon à pouvoir pivoter au niveau de la deuxième ou troisième baguette coulissante (67 ; 68) associée.

14. Dispositif selon l'une quelconque des revendications précédentes, au moins une butée (72) étant fixée au niveau du premier et/ou du deuxième guide coulissant (60 ; 61), ladite baguette ressortant dans la direction de levée (12) au-delà de la chaîne de transport (41 ; 42) associée.
